# EUROPEAN PATENT SPECIFICATION

(11) **EP 3 168 079 B1**
(45) Date of publication and mention of the grant of the patent: **18.12.2019**
(21) Application number: 16171722.8
(22) Date of filing: 27.05.2016
(51) Int. Cl.: B60P 1/48

(54) **SKIP LOADER APPARATUS WITH A DEMOUNTABLE AND REPLACEABLE CONTAINER AND RELATED TRUCK**
ABSETZKIPPERVORRICHTUNG MIT EINEM ABNEHMBAREN UND AUSTAUSCHBAREN CONTAINER UND ZUGEHÖRIGER LASTKRAFTWAGEN
APPAREIL DE CHARGEMENT À BENNE AVEC CONTENANT DÉMONTABLE ET REMPLAÇABLE ET CAMION ASSOCIÉ

(30) Priority: 11.11.2015 IT UB20155467
(43) Date of publication of application: 17.05.2017
(73) Proprietor: Pris-Mag S.r.l., 20871 Vimercate (MB) (IT)
(72) Inventor: SALA, Alessandro, 20871 VIMERCATE MB (IT); SALA, Paolo, 20871 VIMERCATE MB (IT)
(74) Representative: Mittler, Enrico

(56) References cited:
- WO-A1-00/06417
- DE-B3- 10 307 790
- GB-A- 2 118 519
- US-A- 3 074 573

## Description

The present invention relates to a skip loader apparatus with a demountable and replaceable container and to the related truck.

Skip loader-type apparatuses applied to the chassis of trucks or trailers are known, said apparatuses being provided with a load platform for receiving a receptacle referred to as a container or skip, and with an apparatus for positioning the container on the platform and tipping it to empty the goods contained therein. Skip loader apparatuses can be adapted to various types of skips or containers, thus they are apparatuses with a demountable and replaceable container.

Such skip loader apparatuses with a demountable and replaceable container have two lifting arms hinged to one end of the chassis, e.g. of a truck, and hydraulic cylinders for orienting the arms with respect to the hinge point with the truck. Connection points for chains, the ends of which are hooked to pins of the container, are provided at the outer ends of said lifting arms; two pins are normally provided for each side wall of the container. Once the chains have been hooked to the pins of the container, the latter may be lifted by the lifting arms and taken toward the load platform and deposited thereon, thus carrying out the so-called loading operation, or taken far from the load platform and placed outside the truck, thus carrying out the so-called unloading operation.

One or more hooks are normally provided to perform the tipping operation, which may be engaged with the container when the container is arranged on the load platform. During the tipping operation, the lifting arms are oriented toward the outside of the truck and the hooks retain the container, thus causing the tipping thereof in order for the goods contained therein to be emptied therefrom.

However, this system for tipping the container has several disadvantages as for the operating safety. The hooks may indeed disconnect from the container, thus allowing the container to oscillate and cause significant damage to the truck; if the container is very heavy, it may also cause the truck to overturn.

A truck with a skip loader apparatus with a demountable container which overcomes the aforesaid disadvantages is described in DE 10307790. The truck comprises a load platform where a container is supported, and an apparatus for lifting the container comprising two hydraulic arms hinged to the end of the truck; connection points for chains to be connected to the container for moving the container itself are found at the end of the two lifting arms. Each lifting arm, at the end thereof not connected to the truck, has an extension of the arm bent at a fixed angle with respect to the lifting arm. The lifting arm extension has a hydraulic element which acts on the chains so as to block the container relative to the lifting arms. Two hydraulic cylinders connected to the truck with the related rods connected to the lifting arms cause the rotation of the lifting arms about the hinge point to allow the container to be lifted and positioned on the load platform and then tipped for the goods contained therein to be emptied therefrom.

The truck of the aforesaid German patent is complex to be manufactured because it includes an extension of each lifting arm with a hydraulic element for tensioning the lifting chains of the container. Moreover, providing the two extensions with the two hydraulic elements negatively affects the weight and volume of the truck.

GB 2118519 discloses a skip loader apparatus as defined in the preamble of claim 1.

In view of the prior art, it is the object of the present invention to provide a skip loader apparatus with a demountable and replaceable container which is less cumbersome and simpler to be manufactured as compared to the known ones.

According to the present invention, such an object is achieved by a skip loader apparatus with a demountable and replaceable container as defined in claim 1

The arrangement of the blocking means on the two lifting arms in a position between the two ends allows less volume and increased safety for the operators to be obtained.

Said blocking means preferably comprise two elements adapted to be engaged with the side walls of the container for the operation of tipping the container.

Thereby, the blocking means act directly on the side walls of the container without acting on the suspension means for blocking the container, as indicated in DE 10307790.

The skip loader apparatus even more preferably comprises two recess elements, each one connected to one side wall of the container and said elements of said blocking means are adapted to be engaged with said two recess elements.

Thereby, a constraining member is created for the elements of the blocking means, on the side walls of the container.

The blocking means preferably comprise two hydraulic cylinders, the rods of which are adapted to be engaged with said two recess elements for the operation of tipping the container.

Even more preferably, said two recess elements are separate from the container and are engaged with pins of the container.

Thereby, there is no need to manufacture a new container with recess elements incorporated in the container; since each recess element is separate from the container, it can be adapted to existing containers since it is already engaged with a pre-existing pin on the container.

Said pins of said recess elements preferably correspond to connection pins of the suspension means.

Thereby, the pins of the container to which the suspension means are hooked are utilized as pins for the recess elements.

The features and advantages of the present invention will become apparent from the following detailed description of a practical embodiment thereof, shown by way of non-limiting examples in the accompanying drawings, in which:
figure 1 is a partial side view of a skip loader apparatus with a demountable container according to the present invention;
figure 2 shows the various steps of unloading the container of the skip loader apparatus in figure 1;
figure 3 shows the various steps of tipping the container of the skip loader apparatus in figure 1;
figure 4 is a diagrammatic top view of the skip loader apparatus with a demountable container in figure 1;
figures 5 and 6 show a detailed view of the blocking means of the skip loader apparatus according to the present invention, in a resting position (fig. 5) and in a working position (fig. 6), respectively.

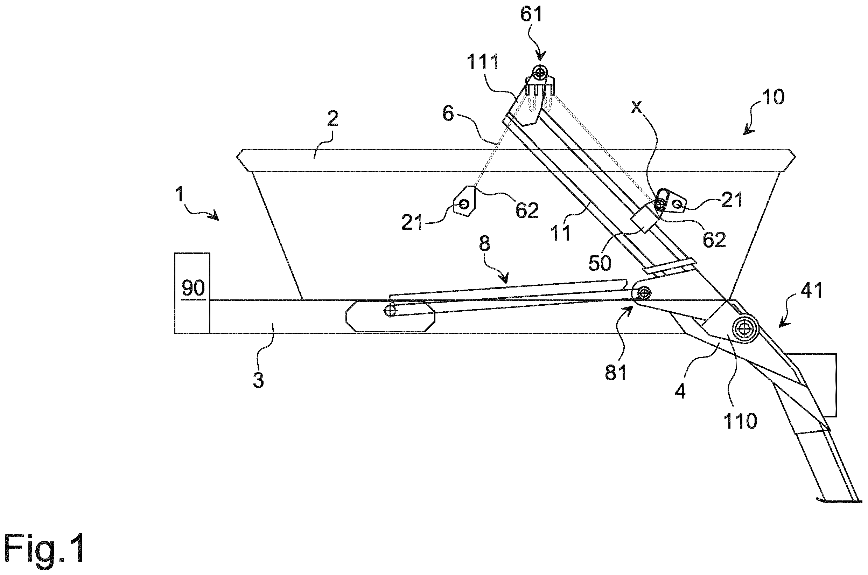

Figures 1-6 describe a skip loader apparatus 1 with a demountable and replaceable container 2 according to the present invention; the skip loader apparatus in figures 1-6 is applicable in a known manner to the chassis of a truck or a trailer, etc. but preferably to the chassis of a truck. The skip loader apparatus 1 comprises a load platform 3 where container 2 is arranged for the transport thereof; the load platform is fixed in a known manner to the chassis of the truck.

The skip loader apparatus 1 is provided with an apparatus 10 for lifting container 2; said apparatus 10 comprises two lifting arms 11 of the telescopic type and preferably of the hydraulic type, having ends 110 hinged to one end 4 of the skip loader apparatus, preferably at one end 4 of the load platform 3, at a hinge point 41 (fig. 1) which, as is known from the prior art, is located in the truck part opposite to the position of the cabin once the skip loader apparatus has been applied on the chassis of the truck.

At least one hydraulic cylinder 8, but preferably a pair of hydraulic cylinders 8 are connected to the skip loader apparatus, preferably connected to the load platform 3, and hinged to the lifting arms 11 at points 81; the hydraulic cylinders 8 allow the orientation of the lifting arms, that is they allow the lifting arms 11 to perform a rotation up to a given angle with respect to the hinge point 41.

The skip loader apparatus 1 is provided with suspension means 6 for container 2; the lifting arms 11 each comprise at least one connection point 61 for the suspension means 6 at the other end 111 opposite to end 110. The suspension means 6 preferably consist of two chains, each of which has ends 62 which engage two pins 21 of a side wall 22 of container 2. As is known from the prior art, the pins 21 of each pair of pins 21 are at a given distance on each side wall 22 so that container 2 can be stably lifted and translated by the lifting arms 11. The side walls 22 of container 2 are preferably opposite to each other.

Blocking means 50 are provided for blocking container 2 relative to the lifting arms 11; the blocking means may preferably act on the container once the container 2 itself has been lifted by the two lifting arms 11, are connected to the two lifting arms 11 in a position between the ends 110, 111, and are adapted to act on the side walls 22 of the container for the operation of tipping the container. The blocking means 50 are generally fixed to the two lifting arms 11 but they may also be connected to the two lifting arms 11 in a removable manner.

The blocking means 50 preferably comprise a pair of elements 51, each of which is adapted to be engaged with one of the two side walls 22 of the container for the operation of tipping the container. The elements 51 of the pair of elements 51 are preferably adapted to be engaged orthogonally with the two side walls 22 of the container, along a transversal axis X, for the operation of tipping the container.

Even more preferably, the skip loader apparatus comprises two recess elements 7, each connected to a side wall 22 of container 2; each element 51 of said blocking means is adapted to be engaged with one of the two recess elements 7 for blocking container 2 relative to the lifting arms 11.

The blocking means preferably comprise two hydraulic cylinders 52, the rods 51 of which are adapted to be engaged with the two recess elements 7 connected to the two side walls 22 of the container for the operation of tipping the container.

Even more preferably, each recess element 7 is separate from container 2 but is engaged with one pin of the side wall 22 of container 2 which corresponds to one of the pins 21 with which the suspension means 6 are engaged.

The blocking means 50 are adapted to act on both side walls 22 of the container for the operation of tipping the container.

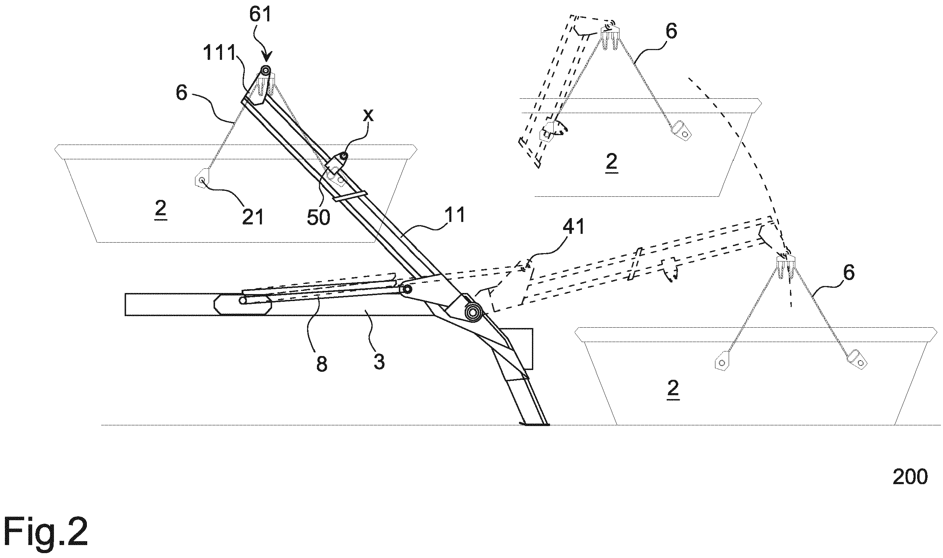

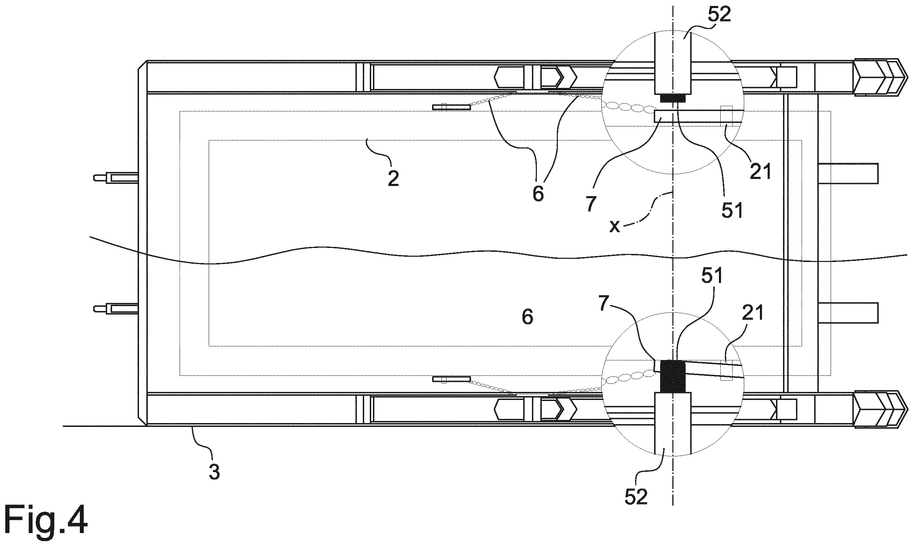

During the operation loading and unloading operation of the container 2 (shown in figure 2), the blocking means 50 do not intervene on container 2 which, after being coupled to the lifting arms 11 by means of the chains 6, the ends 62 of which are arranged to be engaged with the pins 21, may be lifted and translated by the arms 11 by means of the action of the hydraulic cylinders 8 toward the load platform 3 or outside the truck on which the skip loader apparatus is applied, for example to deposit container 2 on ground 200. During the loading and unloading operation, the container 2 is not blocked relative to the lifting arms 11 and the hydraulic cylinders 52 are in a resting position with rod 51 inside cylinder 52, as shown in the top part of figure 4.

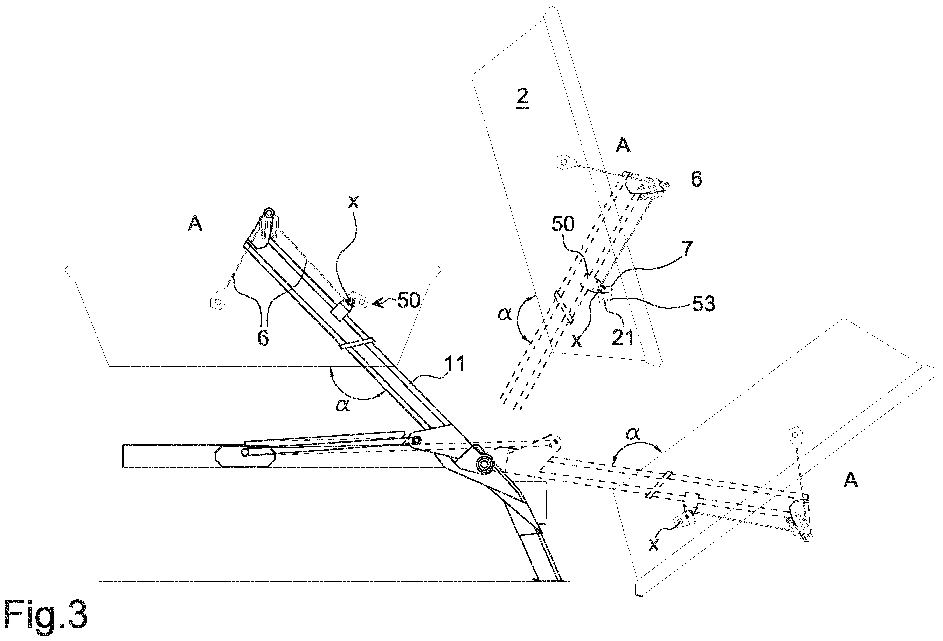

During the tipping operation the container 2 (shown in fig. 3), once it has been lifted from platform 3 by means of the lifting arms 11, due to the action of the chains 6 with the ends 62 connected to the pins 21 of the side walls 22 of container 2, is blocked in a position A relative to the lifting arms 11 by means of the blocking means 50. The tipping operation of the container 2 is carried out by the hydraulic cylinders 8 which act on the lifting arms 11 for the rotation thereof with respect to the hinge point 41. During the various tipping steps, the container 2 always remains blocked in position A with respect to the lifting arms 11 so that the angle α formed between container 2, more specifically the bottom 25 of container 2, and the lifting arms 11 is always kept constant in the various tipping steps of container 2; angle α preferably is for example 134°.

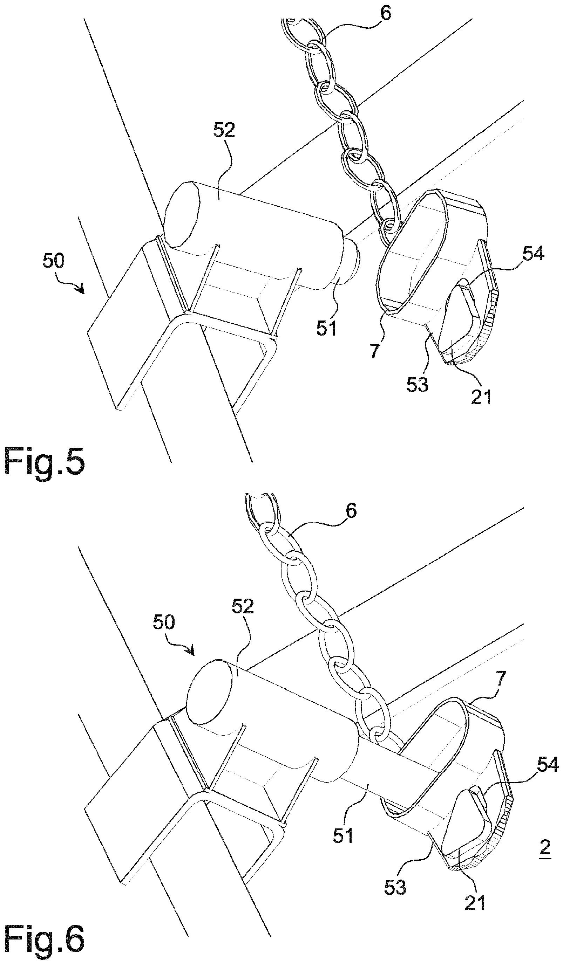

During the tipping operation, the container 2 is blocked relative to the lifting arms 11 in position A by the action of the hydraulic cylinders 52, which are in a working position with rod 51 outside cylinder 52 and engaged with the recess element 7, as shown in the bottom part of figure 4. Each rod 51 abuts on the recess element 7, particularly on the surface of the recess element which is parallel to the side surface 22 of container 2, and compresses it toward the side wall 22 of container 2, as shown again in the bottom part of figure 4 and in figure 6. The pressure of the rods 51 on the side walls 22 prevents the oscillation of container 2, thus allowing the tipping thereof; the recess part of the element forms a position restraint for rod 51, since the rod kept in pressure against element 7 and on wall 22 cannot come out of the recess element 7.

One end 62 of the chains 6 is preferably integral with a bracket 53; each bracket 53 comprises a hole 54 shaped so as to engage one of the pins 21 of the side wall 22 of container 2. Bracket 54 is integral with the recess element 7 so that when the rod 51 of the hydraulic cylinder 52 is engaged with the recess element 7, it is also engaged with bracket 53, as shown in more detail in figures 5 and 6.

The lifting arms 11 are of the telescopic type and this allows a variable and adjustable tipping height of container 2 to be obtained, since once container 2 has been blocked relative to the lifting arms 11 by the blocking means 50, it may be lifted by the telescopic lifting arms 11 to various heights off ground 200, with the blocking means also being movable because they are connected to the telescopic lifting arms 11.

Each hydraulic cylinder 52 is controlled by control means 90, for example control buttons, which are preferably arranged on the chassis of the truck so as to be adjacent to the load platform 3 and to the cabin, and opposite to the hinge point 41 of the lifting arms 11.

## Claims

1. Skip loader apparatus (1) with a demountable and replaceable container (2), said skip loader apparatus comprising:
- a load platform (3) for positioning the container,
- a lifting apparatus (109) of the container which comprises two arms (11) hinged (41) at one end (110) with one end (4) of the skip loader apparatus and forming at least one connection point (61) for suspension means (61) of the container at the other end (111),
- hydraulic means (8) connected to the skip loader apparatus and suitable for orienting the two lifting arms of the container for the lifting, deposition and tipping operations of the container,
- blocking means (50) for blocking the container relative to the lifting arms, said blocking means being connected to said two lifting arms at a position comprised between the two ends of said lifting arms and being suitable for acting on both the side walls (22) of the container for the tipping operation of the container, said blocking means (50) comprising two elements (51) suitable for engaging with the side walls (22) of the container (2) for the tipping operation of the container,
- two recess elements (7) each one connectible to one side wall of the container, said two elements (51) of blocking means (50) being suitable for engaging with said two recess elements, **characterized in that** said two recess elements are separated from the container and are suitable for engaging with two pins (21) of the container.

2. Skip loader apparatus (1) according to claim 1, **characterized in that** said two elements (51) of the blocking means (50) are suitable for orthogonally engaging with the side walls (22) of the container (2) for the tipping operation of the container.

3. Skip loader apparatus (1) according to claim 2, **characterized in that** each one of said two elements (51) of blocking means (50) is suitable for going in abutment with one of the side walls (22) of the container (2) for the tipping operation of the container.

4. Skip loader apparatus (1) according to claim 1, **characterized in that** said blocking means (50) comprise two hydraulic cylinders (52) the rods of which are suitable for engaging with said two recess elements for the tipping operation of the container.

5. Skip loader apparatus (1) according to claim 1, **characterized in that** said two pins (21) of the container correspond to connection pins of the suspension means (6).

6. Skip loader apparatus (1) according to claim 1, **characterized in that** said blocking means (50) are connected to said two lifting arms in a removable manner.

7. Skip loader apparatus (1) according to claim 1, **characterized in that** said blocking means (50) are fixed to said two lifting arms.

8. Skip loader apparatus (1) according to claim 1, **characterized in that** said two lifting arms are telescopic and are suitable for forming an adjustable tipping height for the container.

9. Truck comprising a chassis and a skip loader apparatus as defined in any one of the preceding claims, said skip loader apparatus being fixed to the chassis of the truck.

## Patentansprüche

1. Absetzkippervorrichtung (1) mit einem abnehmbaren und austauschbaren Container (2), wobei die Absetzkippervorrichtung aufweist:
- eine Ladefläche (3) zum Positionieren des Containers,
- eine Hebevorrichtung (109) des Containers, die zwei Arme (11) aufweist, die an einem Ende (110) mit einem Ende (4) der Absetzkippervorrichtung gelenkig verbunden sind (41) und an dem anderen Ende (111) mindestens einen Verbindungspunkt (61) für eine Aufhängeeinrichtung (61) des Containers bilden,
- eine Hydraulikeinrichtung (8), die mit der Absetzkippervorrichtung verbunden ist und zum Ausrichten der beiden Hubarme des Containers für die Hebe-, Absetz- und Kippvorgänge des Containers geeignet ist,
- Blockiereinrichtungen (50) zum Blockieren des Containers relativ zu den Hubarmen, wobei die Blockiereinrichtungen mit den beiden Hubarmen an einer Stelle verbunden sind, die zwischen den beiden Enden der Hubarme liegt, und geeignet sind, auf beide Seitenwände (22) des Containers für den Kippvorgang des Containers einzuwirken, wobei die Blockiereinrichtungen (50) zwei Elemente (51) aufweisen, die zum Zusammenwirken mit den Seitenwänden (22) des Containers (2) für den Kippvorgang des Containers geeignet sind,
- zwei Aussparungselemente (7), die jeweils mit einer Seitenwand des Containers verbindbar sind, wobei die beiden Elemente (51) der Blockiereinrichtungen (50) zum Zusammenwirken mit den beiden Aussparungselementen geeignet sind,
**dadurch gekennzeichnet, dass** die beiden Aussparungselemente von dem Container getrennt sind und zum Zusammenwirken mit zwei Stiften (21) des Containers geeignet sind.

2. Absetzkippervorrichtung (1) nach Anspruch 1,
**dadurch gekennzeichnet, dass** die beiden Elemente (51) der Blockiereinrichtungen (50) zum orthogonalen Zusammenwirken mit den Seitenwänden (22) des Containers (2) für den Kippvorgang des Containers geeignet sind.

3. Absetzkippervorrichtung (1) nach Anspruch 2,
**dadurch gekennzeichnet, dass** jedes der beiden Elemente (51) der Blockiereinrichtungen (50) dazu geeignet ist, an einer der Seitenwände (22) des Containers (2) für den Kippvorgang des Containers anzustoßen.

4. Absetzkippervorrichtung (1) nach Anspruch 1,
**dadurch gekennzeichnet, dass** die Blockiereinrichtungen (50) zwei Hydraulikzylinder (52) aufweisen, deren Stangen zum Zusammenwirken mit den beiden Aussparungselementen für den Kippvorgang des Containers geeignet sind.

5. Absetzkippervorrichtung (1) nach Anspruch 1,
**dadurch gekennzeichnet, dass** die beiden Stifte (21) des Containers den Verbindungsstiften der Aufhängeeinrichtung (6) entsprechen.

6. Absetzkippervorrichtung (1) nach Anspruch 1,
**dadurch gekennzeichnet, dass** die Blockiereinrichtungen (50) lösbar mit den beiden Hubarmen verbunden sind.

7. Absetzkippervorrichtung (1) nach Anspruch 1,
**dadurch gekennzeichnet, dass** die Blockiereinrichtungen (50) an den beiden Hubarmen befestigt sind.

8. Absetzkippervorrichtung (1) nach Anspruch 1,
**dadurch gekennzeichnet, dass** die beiden Hubarme teleskopierbar sind und zum Bilden einer einstellbaren Kipphöhe für den Container geeignet sind.

9. Lastkraftwagen mit einem Fahrgestell und einer Absetzkippervorrichtung nach einem der vorhergehenden Ansprüche, wobei die Absetzkippervorrichtung an dem Fahrgestell des Lastkraftwagens befestigt ist.

## Revendications

1. Appareil de chargement à benne (1) avec un contenant démontable et remplaçable (2), ledit appareil de chargement à benne comprenant :
- une plateforme de charge (3) pour positionner le contenant,
- un appareil de levage (109) du contenant qui comprend deux bras (11) articulés (41) à une extrémité (110) avec une extrémité (4) de l'appareil de chargement à benne et formant au moins un point de connexion (61) pour un moyen de suspension (61) du contenant à l'autre extrémité (111),
- des moyens hydrauliques (8) reliés à l'appareil de chargement à benne et adaptés pour orienter les deux bras de levage du contenant pour les opérations de levage, de dépôt et de bascule du contenant,
- des moyens de blocage (50) pour bloquer le contenant par rapport aux bras de levage, lesdits moyens de blocage étant reliés auxdits deux bras de levage à une position comprise entre les deux extrémités desdits bras de levage et étant adaptés pour agir sur les deux parois latérales (22) du contenant pour l'opération de bascule du contenant, lesdits moyens de blocage (50) comprenant deux éléments (51) adaptés pour entrer en prise avec les parois latérales (22) du contenant (2) pour l'opération de bascule du contenant,
- deux éléments en retrait (7), chacun d'entre eux pouvant être relié à une paroi latérale du contenant, lesdits deux éléments (51) des moyens de blocage (50) étant adaptés pour entrer en prise avec lesdits deux éléments en retrait, **caractérisé en ce que** lesdits deux éléments en retrait sont séparés du contenant et sont adaptés pour entrer en prise avec deux broches (21) du contenant.

2. Appareil de chargement à benne (1) selon la revendication 1, **caractérisé en ce que** lesdits deux éléments (51) des moyens de blocage (50) sont adaptés pour entrer en prise de manière orthogonale avec les parois latérales (22) du contenant (2) pour l'opération de bascule du contenant.

3. Appareil de chargement à benne (1) selon la revendication 2, **caractérisé en ce que** chacun desdits deux éléments (51) des moyens de blocage (50) est adapté pour venir en butée avec l'une des parois latérales (22) du contenant (2) pour l'opération de bascule du contenant.

4. Appareil de chargement à benne (1) selon la revendication 1, **caractérisé en ce que** lesdits moyens de blocage (50) comprennent deux cylindres hydrauliques (52) dont les tiges sont adaptées pour entrer en prise avec lesdits deux éléments en retrait pour l'opération de bascule du contenant.

5. Appareil de chargement à benne (1) selon la revendication 1, **caractérisé en ce que** lesdites deux broches (21) du contenant correspondent à des broches de connexion des moyens de suspension (6).

6. Appareil de chargement à benne (1) selon la revendication 1, **caractérisé en ce que** lesdits moyens de blocage (50) sont reliés auxdits deux bras de levage de manière amovible.

7. Appareil de chargement à benne (1) selon la revendication 1, **caractérisé en ce que** lesdits moyens de blocage (50) sont fixés auxdits deux bras de levage.

8. Appareil de chargement à benne (1) selon la revendication 1, **caractérisé en ce que** lesdits deux bras de levage sont télescopiques et sont adaptés pour former une hauteur de bascule réglable pour le contenant.

9. Camion comprenant un châssis et un appareil de chargement à benne selon l'une quelconque des revendications précédentes, ledit appareil de chargement à benne étant fixé au châssis du camion.
